# EUROPÄISCHE PATENTANMELDUNG

(11) **EP 1 345 303 A1**
(43) Veröffentlichungstag der Anmeldung: **17.09.2003**
(21) Anmeldenummer: 02005753.5
(22) Anmeldetag: 13.03.2002
(51) Int. Cl.: H02G 3/12

(54) **Montagesystem mit einer Einbaudose und einem Montagehalter**

(71) Anmelder: Vigl, Reinhard, 39054 Klobenstein (IT)
(72) Erfinder: Vigl, Reinhard, 39054 Klobenstein (IT)
(74) Vertreter: Dendorfer, Claus, Dr.

(57) **Zusammenfassung**

Ein Montagesystem zur Installation einer Einbaudose (10) in eine Ausnehmung (60) eines Gebäudeteils weist die Einbaudose (10) und einen mit der Einbaudose (10) verbindbaren Montagehalter (40) auf. Nach einem ersten Aspekt der Erfindung ist das Montagesystem dadurch weitergebildet, daß der Montagehalter (40) dazu eingerichtet ist, an einer Sohle (64) der Ausnehmung (60) fixiert zu werden, und daß die Einbaudose (10) dazu eingerichtet ist, mit dem an der Sohle (64) fixierten Montagehalter (40) verbunden zu werden. Nach einem zweiten Aspekt der Erfindung ist das Montagesystem dadurch weitergebildet, daß die Verbindung zwischen der Einbaudose (10) und dem Montagehalter (40) eine Veränderung der Position und/oder Lage der Einbaudose (10) relativ zu dem Montagehalter (40) gestattet. Eine Einbaudose (10), ein Montagehalter (40) und ein Verfahren zur Installation einer Einbaudose (10) in einer Ausnehmung (60) weisen entsprechende Merkmale auf. Die Erfindung schlägt einen Weg vor, um Einbaudosen bequem und zeitsparend in beliebige Ausnehmungen von Gebäudeteilen zu installieren.

## Beschreibung

Die Erfindung betrifft das Gebiet der Bau- und Installationstechnik und insbesondere die Montage von Einbaudosen in Ausnehmungen von Gebäudeteilen wie z.B. Wänden, Decken oder Böden. Spezieller betrifft die Erfindung eine Einbaudose, einen mit der Einbaudose verbindbaren Montagehalter, ein Montagesystem, das diese Komponenten aufweist, und ein Verfahren zur Installation einer Einbaudose.

Einbaudosen als solche sind in vielerlei Ausgestaltungen gut bekannt. Typischerweise dienen die Einbaudosen zur Aufnahme elektrischer oder kommunikationstechnischer Einrichtungen oder Verbindungen. Die Einbaudosen können z.B. als Kabelabzweigdosen oder als Gerätedosen für Schalter, elektrische Steckdosen, Netzwerksteckdosen, Haussprechanlagen, Hausstromverteiler, Notbeleuchtung und so weiter ausgestaltet sein. Je nach den regionalen Gepflogenheiten kann eine zylindrische oder quaderförmige Bauform der Einbaudosen gebräuchlich sein. Die im vorliegenden Dokument betrachteten Einbaudosen sind vorzugsweise Unterputzdosen.

Auf traditionelle Weise wird eine Einbaudose in einer Ausnehmung eines Gebäudeteils installiert, indem die Einbaudose zunächst mit Gips in der Ausnehmung fixiert wird. Nach dem Verlegen der Leitungen und/oder Leerrohre wird Mörtel verwendet, um erstens die Leitungen und/oder Leerrohre in den Leitungskanälen und zweitens die Einbaudosen in den Ausnehmungen fest einzumauern.

Die Verwendung von Gips bei dieser traditionellen Vorgehensweise ist jedoch aus mehreren Gründen problematisch. Erstens muß für jede einzelne Einbaudose oder Dosengruppe erneut eine frische Gipsmischung angerührt werden. Dies und die späteren Reinigungsarbeiten erfordern einen Zeitaufwand von mehreren Minuten pro Dose oder Dosengruppe. Zweitens muß jede Dose oder Dosengruppe hinsichtlich ihrer Lage und Ausrichtung in allen Raumachsen genau positioniert werden, bevor der Gips abbindet. Dies stellt eine erhebliche Schwierigkeit insbesondere für Heimwerker oder Auszubildende dar. Drittens ist die Gipsfixierung oft relativ instabil, weil seitliche Kabeleinlässe freigehalten werden müssen. Wenn nach der Fixierung Leerrohre in diese Einlässe eingeführt werden, kann sich die Fixierung lösen, und die Arbeiten müssen von vorne ausgeführt werden. Schließlich ist das Arbeiten mit frischem Gips sehr belastend für die Haut, insbesondere deshalb, weil Handschuhe wegen der erforderlichen Genauigkeit beim Ausrichten der Dose nicht getragen werden können. Gerade der letztgenannte Aspekt ist ein erhebliches Problem, das schon manchen erfahrenen Monteur zur Berufsaufgabe veranlaßt hat.

Aus der europäischen Patentschrift EP 0 268 022 B1 sind eine Einbaudose sowie ein mit der Einbaudose verbindbarer Träger bekannt. Es ist vorgesehen, die Einbaudose zusammen mit dem Träger in ein in eine Wand gebohrtes Loch einzuschieben. Während des Einschiebens lagern sich Haltelaschen des Trägers an der seitlichen Begrenzungswand der Bohrung an.

Diese bekannte Ausgestaltung vermeidet zwar die oben beschriebenen Probleme bei der Gipsmontage; sie ist jedoch auf die Montage von Einbaudosen in Wandbohrungen beschränkt, die exakt die vorgesehene Position und exakt die richtigen Innenmaße aufweisen. Für Ausnehmungen, die beispielsweise in eine Wand gemeißelt worden sind oder die hinsichtlich ihrer Lage nur ungefähr der gewünschten Position der Einbaudose entsprechen, kann die beschriebene Vorgehensweise nicht eingesetzt werden.

Die Erfindung hat demgemäß die Aufgabe, die genannten Probleme zumindest zum Teil zu vermeiden und einen Weg vorzuschlagen, um Einbaudosen bequem und zeitsparend in beliebige Ausnehmungen von Gebäudeteilen zu installieren. Insbesondere soll durch die Erfindung eine gipsfreie Montage ermöglicht werden. Die erforderliche Ausrichtung der Einbaudose soll in bevorzugten Ausführungsformen in mehrere Teilschritte aufgespalten werden.

Erfindungsgemäß wird diese Aufgabe ganz oder zum Teil gelöst durch ein Montagesystem mit den Merkmalen von Anspruch 1 bzw. Anspruch 7, durch eine Einbaudose gemäß Anspruch 10, durch einen Montagehalter gemäß Anspruch 11 und durch ein Verfahren zur Installation einer Einbaudose gemäß Anspruch 12. Die abhängigen Ansprüche definieren bevorzugte Ausgestaltungen der Erfindung.

Die Erfindung geht von der Grundidee aus, einen Montagehalter zu verwenden, der auch für ungenaue, beispielsweise gemeißelte, Ausnehmungen geeignet ist. Nach einem ersten Aspekt der Erfindung ist vorgesehen, den Montagehalter nicht an den seitliche Begrenzungen der Ausnehmung, sondern an der Sohle der Ausnehmung zu fixieren. Die Einbaudose ist dann dazu ausgerichtet, mit dem bereits an der Sohle der Ausnehmung fixierten Montagehalter verbunden zu werden. Durch diese Maßnahme ist die Installation der Einbaudose unabhängig von der möglicherweise sehr grob ausgeführten seitlichen Begrenzung der Ausnehmung. Der Montagehalter kann vielmehr an genau die gewünschte Stelle innerhalb der Ausnehmung angebracht werden.

Vorzugsweise ist die Einbaudose auf den an der Sohle fixierten Montagehalter aufsetzbar, insbesondere aufschnappbar. Es sind jedoch auch Ausgestaltungen denkbar, bei denen eine gewisse seitliche Schiebebewegung durchgeführt werden muß. Obwohl eine formschlüssige Schnappverbindung bevorzugt wird, sind in Ausführungsalternativen auch reibschlüssige Verbindungen oder magnetische Verbindungen oder Klebeverbindungen oder Verbindung nach Art eines Klettverschlusses denkbar. Der Montagehalter ist jedoch stets als vorgeformtes Bauteil, beispielsweise aus Kunststoff und/oder Metall, ausgeführt.

Vorzugsweise wird die Verbindung zwischen Montagehalter und Einbaudose durch zwei einander zugeordnete Verbindungselemente geschaffen, von denen eines an der Einbaudose und das andere am Montagehalter angeordnet ist und die miteinander in Eingriff bringbar sind. Besonders bevorzugt ist eines der Verbindungselemente zumindest teilweise gekrümmt, insbesondere in Form einer Kugeloberfläche gekrümmt. Wenn das andere Verbindungselement diese gekrümmte oder kugelige Form umschließt, besteht eine wünschenswerte Möglichkeit zur Verschwenkung und/oder Verdrehung der Einbaudose relativ zum Montagehalter um Schwenk- bzw. Drehachsen, die durch den Kugelmittelpunkt verlaufen.

Der Montagehalter ist vorzugsweise dazu eingerichtet, an der Sohle der Ausnehmung in feuchten Mörtel eingedrückt und dadurch nach dem Abbinden des Mörtels fixiert zu werden. In anderen Ausführungsformen sind alternativ oder zusätzlich weitere Fixierungsmittel vorgesehen; beispielsweise kann der Montagehalter auch an die Sohle der Ausnehmung angenagelt werden. Um die Fixierung durch Eindrücken in feuchten Mörtel zu ermöglichen, ist der Montagehalter vorzugsweise so ausgestaltet, daß er wegen seines geringen Gewichts und weil sein Schwerpunkt nicht weit von der hinteren Seite des Montagehalters entfernt ist, auch in feuchtem Mörtel hält und sich bis zum Aushärten den Mörtels nicht verschiebt.

Das Montagesystem ist vorzugsweise so ausgestaltet, daß die Einbaudose, wenn sie mit der Vorderseite zur Ausnehmung hin orientiert wird, als Hilfsmittel bei der Ausrichtung und/oder Fixierung des Montagehalters dient. Insbesondere kann die Einbaudose zur genauen Ausrichtung des Montagehalters genutzt werden. Der Montagehalter kann in diesem Zusammenhang Halte- und/oder Abstandselemente aufweisen.

Gemäß einem zweiten Aspekt der Erfindung ist die Verbindung zwischen der Einbaudose und dem Montagehalter derart ausgestaltet, daß eine Veränderung der Position oder der Lage oder der Position und Lage der Einbaudose relativ zu dem Montagehalter möglich ist. Unter "Position" soll in diesem Zusammenhang die räumliche Entfernung von Montagehalter und Einbaudose entlang der drei Raumachsen angesehen werden. Unter dem Begriff "Lage" soll dagegen die Winkelstellung von Montagehalter und Einbaudose entlang einer durch beide Bauteile verlaufenden Drehachse beziehungsweise der Schwenkwinkel beider Bauteile um Schwenkachsen, die ungefähr parallel zum Boden der Einbaudose verlaufen, angesehen werden.

Gemäß diesem zweiten Aspekt der Erfindung besteht auch nach der Fixierung des Montagehalters noch ein gewisser Spielraum zur Einstellung der Position und/oder der Lage der Einbaudose. Bei der Fixierung des Montagehalters braucht daher nur auf diejenigen Orts- und Winkelmaße geachtet werden, die sich nachträglich nicht mehr durch die variable Verbindung zwischen der Einbaudose und dem Montagehalter einstellen lassen.

In besonders vorteilhaften Ausgestaltungen der Erfindung sind die beiden genannten Grundaspekte kombiniert, so daß erstens der Montagehalter zur Fixierung an der Sohle der Ausnehmung vorgesehen ist und zweitens die Verbindung in gewissem Umfang variabel ist.

In einer bevorzugten Ausführungsform legt die Verbindung zwischen der Einbaudose und dem Montagehalter zwar die Position, nicht aber die Lage dieser beiden Bauteile zueinander fest. In diesem Fall kann die Einbaudose auf dem fixierten Montagehalter noch um eine Achse senkrecht zur Sohle der Ausnehmung gedreht und um einen gewissen Bereich zur Seite verschwenkt werden. Diese Eigenschaft ergibt sich insbesondere dann, wenn eine Verbindung mit einem kugelförmigen Verbindungselement vorgesehen ist.

Bevorzugt ist die Verbindung zwischen der Einbaudose und dem Montagehalter relativ schwergängig ausgestaltet. Durch diese Maßnahme soll eine unerwünschte Veränderung der Position und/oder Lage der Einbaudose selbst dann verhindert werden, wenn die bei der Verlegung von Kabeln und/oder Leerrohren üblichen Kräfte auf die auf den Montagehalter aufgesetzte Einbaudose wirken. Um eine unerwünschte Positions- und/oder Lageveränderung der Einbaudose zuverlässig zu verhindern, sind in bevorzugten Ausgestaltungen Sicherungsmittel vorgesehen. So kann beispielsweise nach dem Ausrichten der Einbaudose ein Sicherungskeil in eines der Verbindungselemente geschlagen werden. Der Sicherungskeil spreizt das Verbindungselement und verhindert dadurch eine weitere Verdrehung oder Verschwenkung der Einbaudose. Alternativ oder zusätzlich können miteinander in Kontakt kommende Flächen der Einbaudose und des Montagehalters mit einem Zweikomponenten-Klebstoff beschichtet sein, der einige Zeit nach dem ersten Aufsetzen der Einbaudose auf den Montagehalter abbindet.

Die erfindungsgemäße Einbaudose, der erfindungsgemäße Montagehalter und das erfindungsgemäße Verfahren sind vorzugsweise mit Merkmalen weitergebildet, die den gerade beschriebenen und/oder in den abhängigen Ansprüchen definierten Merkmalen entsprechen.

Weitere Merkmale, Vorteile und Aufgaben der Erfindung gehen aus der folgenden detaillierten Beschreibung mehrerer Ausführungsbeispiele und Ausführungsalternativen hervor. Es wird auf die schematischen Zeichnungen verwiesen, in denen zeigen:
Fig. 1 eine Vorderansicht einer Einbaudose gemäß einem ersten Ausführungsbeispiel der Erfindung,
Fig. 2 eine Seitenansicht der Einbaudose gemäß Fig. 1 von rechts,
Fig. 3 eine Vorderansicht eines Montagehalters gemäß dem ersten Ausführungsbeispiel der Erfindung,
Fig. 4 die Seitenansicht der Einbaudose gemäß Fig. 2 mit dem aufgesetzten Montagehalter gemäß Fig. 3, der im Schnitt entlang der Linie IV - IV in Fig. 3 dargestellt ist,
Fig. 5 eine teils geschnittene Seitenansicht während des Einbaus des Montagesystems von Fig. 4 in eine Ausnehmung eines Gebäudeteils,
Fig. 6 eine teils geschnittene Seitenansicht des fertig eingebauten Montagesystems von Fig. 5,
Fig. 7 eine Vorderansicht wie in Fig. 3 gemäß einem zweiten Ausführungsbeispiel des Montagehalters,
Fig. 8 den Schnitt entlang der Linie VIII - VIII in Fig. 7,
Fig. 9 eine Vorderansicht wie in Fig. 7 gemäß einem dritten Ausführungsbeispiel des Montagehalters,
Fig. 10 eine Ansicht wie in Fig. 4 mit der Einbaudose gemäß Fig. 2 und dem Montagehalter gemäß Fig. 9,
Fig. 11 eine geschnittene Ansicht eines Verbindungselements, in das ein Sicherungskeil einschlagbar ist, und
Fig. 12 eine Ansicht einer Einbaudose von oben mit einem aufgesetzten, seitlich im Schnitt dargestellten Montagehalter in einem weiteren Ausführungsbeispiel der Erfindung.

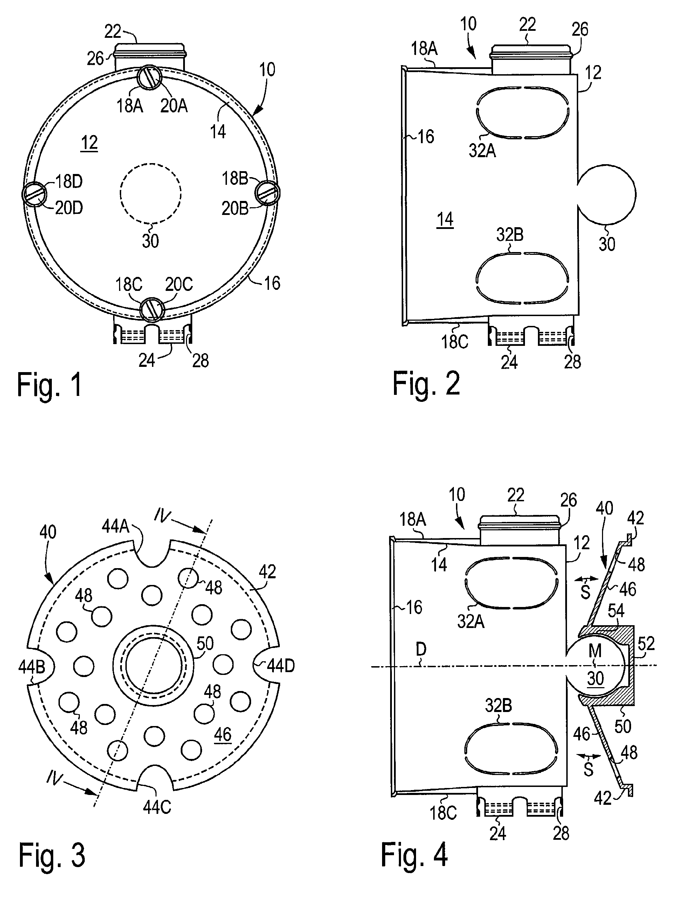

Die in Fig. 1 dargestellte Einbaudose 10 weist in an sich bekannter Weise einen Boden 12 und eine zylindrische Seitenwand 14 auf. An der vorderen, dem Betrachter zugewandten Seite endet die Seitenwand 14 in einem seitlichen, ringförmigen Wulst 16. Im Ausführungsbeispiel von Fig. 1 ist die Einbaudose 10 im wesentlichen zylindrisch mit einem Normdurchmesser von z.B. 60 mm ausgestaltet. In Ausführungsalternativen sind dagegen andere Maße und/oder andere Formgebungen vorgesehen; insbesondere kann die Einbaudose eine ungefähr würfelförmige oder eine ungefähr quaderförmige Form aufweisen; die Seitenwand 14 ist dann aus vier geraden Wandabschnitten gebildet, die jeweils im rechten Winkel aneinanderstoßen.

In der Einbaudose 10 sind vier Aufnahmen 18A, 18B, 18C, 18D für vier Montageschrauben 20A, 20B, 20C, 20D, jeweils um 90° versetzt, im Wulst 16 sowie im vorderen Bereich der Seitenwand 14 angeordnet. Durch die Verwendung von vier (statt, wie sonst üblich, nur zwei) Aufnahmen 18A, 18B, 18C, 18D kann die Einbaudose 10 im vorliegenden Ausführungsbeispiel für elektrische Geräte (z.B. Steckdosen oder Schalter) eingesetzt werden, die unterschiedlichen landesspezifischen Normen entsprechen.

Die Einbaudose 10 gemäß Fig. 1 weist zwei sich diametral gegenüberliegende Ansatzstücke 22, 24 auf. Die beiden Ansatzstücke 22, 24 entsprechen sich hinsichtlich ihrer Form, wobei jedoch das Ansatzstück 22 kleiner ausgestaltet ist, so daß es in das Ansatzstück 24 einer weiteren Einbaudose eingeführt werden kann. Ein umlaufender Wulst 26 des Ansatzstücks 22 greift in diesem Fall in eine entsprechende Rinne 28 des Ansatzstücks 24 der weiteren Einbaudose ein, die an der jeweils inneren Seite des in einzelne Zungen unterteilten Ansatzstücks 24 verläuft. Durch diesen Eingriff des Wulstes 26 in die Rinne 28 wird die Position zweier aneinandergesteckter Einbaudosen 10 festgelegt. In Ausführungsalternativen können zu diesem Zweck andere, gleich wirkende Mittel verwendet werden. Ferner sind Ausgestaltungen ohne Ansatzstücke vorgesehen.

Auf der dem Betrachter abgewandten Seite weist die Einbaudose 10, vom Boden 12 verdeckt, ein erstes Verbindungselement 30 auf, das im vorliegenden Ausführungsbeispiel als fast vollständige, an den Boden 12 angeformte Kugel mit einem Durchmesser von ungefähr 1 cm ausgestaltet ist. Die gesamte Einbaudose 10 einschließlich des Verbindungselements 30 ist bis auf die Montageschrauben 20A, 20B, 20C, 20D als einstückiges, spritzgußgeformtes Kunststoffteil ausgebildet. Das verwendete Kunststoffmaterial entspricht den einschlägigen Vorschriften hinsichtlich seiner elektrischen, mechanischen und feuerhemmenden Eigenschaften.

Die Seitenansicht von Fig. 2 verdeutlicht nochmals die gerade beschriebenen Merkmale der Einbaudose 10 und zeigt ferner vorgesehene Durchbrüche 32A, 32B in der Seitenwand 14. In an sich bekannter Weise sind die vorgesehenen Durchbrüche 32A, 32B der Einbaudose 10 durch leicht ausbrechbare Abschnitte der Seitenwand 14 verschlossen. In Ausführungsalternativen können weitere Durchbrüche in der Seitenwand 14 und/oder im Boden 12 und/oder in den Ansatzstücken 22, 24 vorgesehen sein. Die Tiefe der Einbaudose 10, also die in Fig. 2 seitliche Erstreckung der Seitenwand 14, ist wiederum lediglich beispielhaft dargestellt und kann in Ausführungsalternativen anders gewählt sein.

Fig. 3 zeigt eine erste mögliche Ausgestaltung eines Montagehalters 40, der zusammen mit der bereits beschriebenen Gestaltung der Einbaudose 10 ein erfindungsgemäßes Montagesystem bildet. Im Ausführungsbeispiel gemäß Fig. 3 ist der Montagehalter 40 in der Draufsicht im wesentlichen scheibenförmig mit einem Durchmesser ausgebildet, der ungefähr dem Durchmesser der Einbaudose 10 entspricht. Ein äußerer, umlaufender Haltebereich 42 ist von vier Aussparungen 44A, 44B, 44C, 44D unterbrochen, die in ihrer Anordnung der Position der Aufnahmen 18A, 18B, 18C, 18D der Einbaudose 10 spiegelbildlich entsprechen. An den Haltebereich 42 schließt sich nach innen hin ein Fixierbereich 46 an, der mit einer Vielzahl von Löchern 48 versehen ist. Im Zentrum des Montagehalters 40 ist ein zweites Verbindungselement 50 ausgebildet.

Wie aus der geschnittenen Seitenansicht des Montagehalters 40 in Fig. 4 hervorgeht, ist das zweite Verbindungselement 50 im hier beschriebenen Ausführungsbeispiel ein becherförmiges Bauteil, das einen geschlossenen Boden 52 und einen daran anschließenden Kontaktring 54 aufweist. Der Kontaktring 54 umschließt das erste, kugelförmige Verbindungselement 30 der Einbaudose 10 an einem Kontaktabschnitt, der symmetrisch zum Kugelmittelpunkt M angeordnet ist und eine Breite von ungefähr dem halben Kugeldurchmesser aufweist. Die Innenflächen des Kontaktrings 54 liegen eng an dem ersten Verbindungselement 30 an. In Ausführungsalternativen ist der Kontaktring 54 kein geschlossener Ring, sondern weist einzelne, durch Aussparungen unterbrochene Segmente (ähnlich wie das Ansatzstück 24) auf.

Insgesamt wird durch diese Ausgestaltung eine relativ schwergängige Kugelgelenksverbindung gebildet, die erstens eine Drehung der Einbaudose 10 um die in Fig. 4 gezeigte, zentrale Drehachse D und zweitens eine Verschwenkung der Einbaudose 10 um alle durch den Kugelmittelpunkt M und parallel zum Boden 12 verlaufenden Schwenkachsen ermöglicht (in Fig. 4 ist durch die Pfeile S beispielhaft eine Verschwenkung um eine Schwenkachse gezeigt, die normal zur Zeichenebene und durch den Kugelmittelpunkt M verläuft).

Der Fixierbereich 46 ist im vorliegenden Ausführungsbeispiel als Element in der Form der Mantelfläche eines Kegelstumpfes mit konstanter Materialdicke ausgestaltet. Der Fixierbereich 46 setzt an der dem Boden 12 der Einbaudose 10 zugewandten Ende des zweiten Verbindungselements 50 an und entfernt sich nach außen hin zunehmend vom Boden 12. Durch diese Ausgestaltung wird sichergestellt, daß der Fixierbereich 46 eine Verschwenkung der Einbaudose 10 um einen für die Praxis sinnvollen Verschwenkungsbereich nicht verhindert.

Der Haltebereich 42, der den äußeren Abschluß des Montagehalters 40 bildet, ist so ausgestaltet, daß der Montagehalter 40 locker auf die offene Seite der Einbaudose 10 aufgesteckt werden kann. Dies wird später noch genauer erläutert.

Im vorliegenden Ausführungsbeispiel besteht der Montagehalter 40 wie die Einbaudose 10 aus einem einzigen, spritzgußgeformten Kunststoffteil. Hinsichtlich der Materialwahl muß auf eine hinreichende Elastizität geachtet werden, damit das erste Verbindungselement 30 der Einbaudose 10 in das zweite Verbindungselement 50 mit vernünftigem Kraftaufwand einsteckbar ist. Falls erforderlich, kann der Montagehalter 40 in einem einzigen Spritzgußvorgang aus mehreren unterschiedlichen Kunststoffmischungen geformt werden. Auch ein mehrstückiger Aufbau des Montagehalters 40 aus unterschiedlichen Materialien ist in Ausführungsvarianten vorgesehen.

Im vorliegenden Ausführungsbeispiel ist das erste Verbindungselement 30 in Form eine Patrize ausgebildet, die von dem matrizenförmig gestalteten zweiten Verbindungselement 50 teilweise umschlossen wird. Es sind jedoch auch Ausführungsvarianten vorgesehen, in denen diese Rollen vertauscht sind, also bei denen das der Einbaudose 10 zugeordnete Verbindungselement als Matrize und das dem Montagehalter 40 zugeordnete Verbindungselement als Patrize wirkt. Auch die Form der Verbindungselemente kann variiert werden. Statt der hier beispielhaft beschriebenen, kugelförmigen Ausgestaltung kann beispielsweise eine zylindrische oder kegelförmige oder vielflächige oder eine anders geformte Gestalt vorgesehen sein.

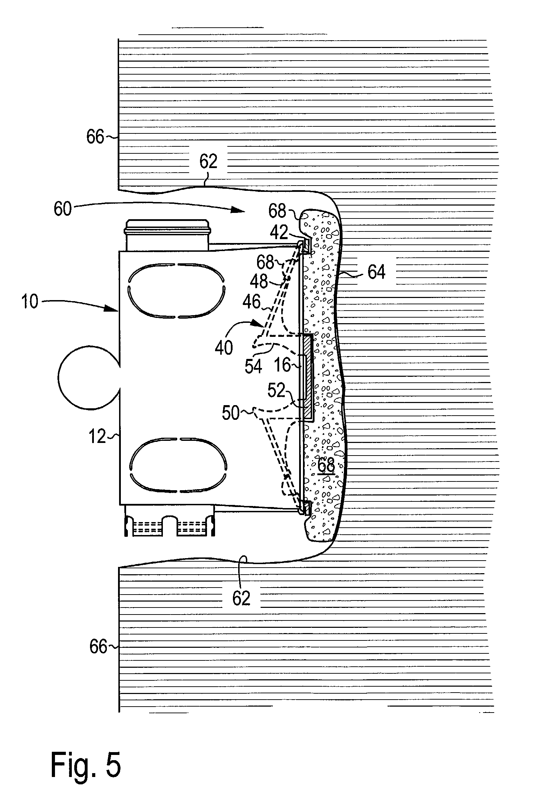

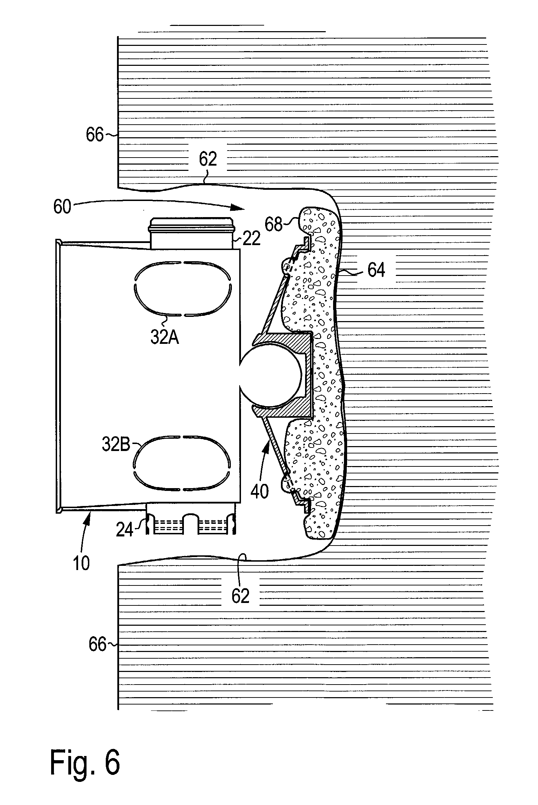

Unter Hinweis auf Fig. 5 und Fig. 6 wird nun die Verwendung des erfindungsgemäßen Montagesystems beschrieben, um die Einbaudose 10 in einer grob gemeißelten Ausnehmung 60 eines Gebäudeteils (beispielsweise einer Wand oder eines sonstigen Mauerstücks) zu installieren. Die Ausnehmung 60 weist hierbei unregelmäßige Seitenwände 62 sowie eine ebenfalls nur grob bearbeitete Sohle 64 auf. Nach vorne wird das Gebäudeteil von einer Vorderfläche 66 begrenzt, auf die nach Fertigstellung aller Installationsarbeiten noch Putz in einer Stärke von ungefähr 1 cm aufgetragen werden wird.

In einem ersten Schritt des Installationsvorgangs wird der Montagehalter 40 an der Sohle 64 der Ausnehmung 60 fixiert. Dazu wird zunächst frischer Mörtel 68 auf die Sohle 64 aufgetragen. Der Monteur steckt dann den Montagehalter 40 mit seinem Haltebereich 42 auf die offene Vorderseite der Einbaudose 10. Wie bereits erwähnt, ist der Haltebereich 42 so ausgebildet und dimensioniert, daß der Montagehalter 40 in einem lockeren Klemmsitz auf der offenen Seite der Einbaudose 10 gehalten wird. Die Aussparungen 44A, 44B, 44C, 44D lassen die Aufnahmen 18A, 18B, 18C, 18D der Einbaudose 10 frei, damit der Sitz des Montagehalters 40 nicht behindert wird.

Als nächsten Schritt führt der Monteur die Einheit aus Einbaudose 10 und Montagehalter 40 in die Ausnehmung 60 ein. Dabei wird der Montagehalter 40 mit seiner Rückseite in den Mörtel 68 gedrückt. Der Mörtel 68 umschließt die Oberflächenstrukturen an der Rückseite des Montagehalters 40 und dringt in gewissem Maße durch die Löcher 48. Die Größe der Löcher 48 ist hierbei so gewählt, daß einerseits eine möglichst stabile Verbindung des Montagehalters 40 mit dem Mörtel 68 entsteht und andererseits der Mörtel 68 nur in sehr geringem Maße durch den Fixierbereich 46 gedrückt wird, um den später möglichen Schwenkbereich der Einbaudose 10 nicht zu vermindern. Ein Lochdurchmesser von wenigen Millimetern kann ausreichen. In Ausführungsalternativen weist der Montagehalter 40 statt der Löcher 48 oder zusätzlich zu den Löchern 48 andere oder weitere Mittel zur Fixierung im Mörtel 68 auf. Dies können insbesondere Vorsprünge oder Stege sein, die aus der Rückseite des Montagehalters 40 und/oder über den seitlichen Rand des Montagehalters 40 hinaus in den Mörtel 68 ragen.

Der Monteur richtet nun den Montagehalter 40 hinsichtlich seiner räumlichen Position aus. Beim hier gegebenen Beispiel der Installation der Einbaudose 10 in einer senkrechten Wand ist durch die Position des Montagehalters 40 bereits die Höhe der Einbaudose 10, ihre Position in Rechts-Links-Richtung und ihre Tiefe in der Wand vorgegeben. Hinsichtlich dieser Koordinaten in den drei Raumachsen muß also bereits der Montagehalter 40 genau ausgerichtet werden. Die Winkellage der Einbaudose 10 ist dagegen nachträglich noch einstellbar, so daß der Montagehalter 40 diesbezüglich nur ungefähr ausgerichtet werden muß. Insgesamt werden daher zum jetzigen Zeitpunkt nur drei Freiheitsgrade der späteren Einbaudose 10 fixiert, während bei einer Gipsmontage nach dem Stand der Technik alle sechs Freiheitsgrade sofort festgelegt werden müßten.

Die nur leicht aufgesteckte Einbaudose 10 dient als Hilfsmittel für die Ausrichtung des Montagehalters 40. Dies gilt insbesondere hinsichtlich der Einbautiefe. Im vorliegenden Ausführungsbeispiel ist der Montagehalter 40 so ausgebildet, daß der Haltebereich 42 ungefähr in einer Linie mit dem Boden 52 des zweiten Verbindungselements 50 angeordnet ist. Mit anderen Worten befindet sich die Einbaudose 10 in ihrer in Fig. 5 gezeigten Orientierung ungefähr um den Durchmesser des ersten Verbindungselements 30 tiefer in der Wand als in ihrer endgültigen Einbaulage. Wenn also im vorliegenden Arbeitsschritt der Boden 12 der Einbaudose 10 ungefähr fluchtend mit der Vorderfläche 66 des Gebäudeteils ausgerichtet wird (wie dies in Fig. 5 gezeigt ist), so ragt der vordere Rand der fertig installierten Einbaudose 10 ungefähr um den Kugeldurchmesser über die Vorderfläche 66 heraus (siehe Fig. 6). Dies ist eine wünschenswerte Anordnung wenn, wie im vorliegenden Ausführungsbeispiel der Fall, der Überstand der installierten Einbaudose 10 ungefähr gleich der Dicke des noch auf die Vorderfläche 66 aufzutragenden Putzes ist.

Zurückkehrend zu Fig. 5 ist die "umgedreht" auf den Montagehalter 40 aufgesteckte Einbaudose 10 auch hilfreich, um die genaue Position der Einbaudose 10 in den beiden parallel zur Vorderfläche 66 verlaufenden Koordinatenachsen festzulegen, weil Messungen an dem fluchtend mit der Vorderfläche 66 angeordneten Boden 12 leichter vorgenommen werden können als an dem in der Ausnehmung 60 befindlichen Montagehalter 40.

Nachdem der Monteur den Montagehalter 40 wie gerade beschrieben hinsichtlich seiner Position ausgerichtet hat, ist die in Fig. 5 gezeigte Situation erreicht. Als nächsten Schritt nimmt der Monteur die Einbaudose 10 von dem Montagehalter 40 ab. Da der Montagehalter 40 nur leicht auf der offenen Seite der Einbaudose 10 sitzt, ist dies möglich, ohne die Position und Lage des Montagehalters 40 im noch feuchten Mörtel 68 zu verändern. Der Montagehalter 40 ohne die Einbaudose 10 ist leicht und weist einen Schwerpunkt auf, der nur wenig aus dem Mörtel 68 hervorragt. Daher behält der Montagehalter 40 ohne weitere Abstützung seine Lage und Position im Mörtel 68 bei, bis der Mörtel 68 ausgehärtet ist. Mit der aufgesteckten Einbaudose 10 (wie in Fig. 5) wäre dies nicht der Fall.

Nach dem Aushärten des Mörtels 68 ist der Montagehalter 40 fest an der Sohle 64 der Ausnehmung 60 fixiert. Der Monteur steckt nun die Einbaudose 10 in der "richtigen" Orientierung auf den Montagehalter 40 auf. Dabei schnappt das erste Verbindungselement 30 in das zweite Verbindungselement 50 ein, so daß sich eine stabile und relativ schwergängige Kugelgelenksverbindung bildet. Diese Situation ist in Fig. 6 gezeigt. Die Verbindung ist so ausgelegt, daß sie nicht nur eine Einbaudose 10, sondern auch weitere Einbaudosen, die an die Ansatzstücke 22 und 24 angesteckt sind, ohne Verrutschen zu halten vermag. Auf diese Weise kann eine ganze Gruppe von Einbaudosen mit einem einzigen Montagehalter 40 installiert werden. Die weiteren Einbaudosen brauchen nicht mit den erfindungsgemäßen Verbindungselementen ausgestattet zu sein.

Zur weiteren Installation führt der Monteur die benötigten Leitungen oder Leerrohre, die sich in Kabelkanälen des Gebäudeteils befinden, durch die Ansatzstücke 22, 24 oder die vorgesehenen Durchbrüche 32A, 32B in die Einbaudose 10 ein. Diese Arbeit wird dadurch erleichtert, daß die Einbaudose 10 auf dem Montagehalter 40 schwenkbar und drehbar ist und auch, falls erforderlich, nochmals abgenommen werden kann. Wenn alle Leitungen und Leerrohre verlegt sind, richtet der Monteur die Einbaudose 10 hinsichtlich ihrer Winkellage um die Drehachse D (Fig. 4) sowie um die zur Drehachse D rechtwinklig angeordneten Schwenkachsen aus. Erst in diesem Arbeitsschritt wird also die Einbaudose 10 hinsichtlich ihrer drei noch verbleibenden Freiheitsgrade fixiert. Die Einbaudose 10 kann nun - in einem Arbeitsgang mit dem Schließen der Kabelkanäle - eingemauert werden, indem Mörtel zwischen die äußere Seitenwand 14 der Einbaudose 10 und die Seitenwände 62 der Ausnehmung 66 gestrichen wird. In einem weiteren Arbeitsgang wird die Vorderfläche 66 verputzt, so daß der vordere Rand der Einbaudose 10 bündig mit der verputzen Fläche abschließt.

Im bisher beschriebenen Ausführungsbeispiel entsprach die Putzdicke ungefähr dem Kugeldurchmesser des ersten Verbindungselements 30. Dies ist jedoch nicht immer der Fall, weil beispielsweise auf die Vorderfläche 66 kein Putz oder nur dünner Putz aufgetragen werden soll oder weil ein größeres Verbindungselement 30 verwendet wird, um eine strammere Verbindung zu erzielen. Der Montagehalter 40 muß dann tiefer in die Ausnehmung 60 eingesetzt werden, was bei dem in Fig. 5 gezeigten Ausführungsbeispiel zur Folge hat, daß der Boden 12 nicht mehr bündig mit der Vorderfläche 66 zu liegen kommt. Dies erschwert die Montage, weil eine Lehre oder eine Schablone verwendet werden muß, um einen definierten Rücksprung des Bodens 12 gegenüber der Vorderfläche 66 zu erreichen.

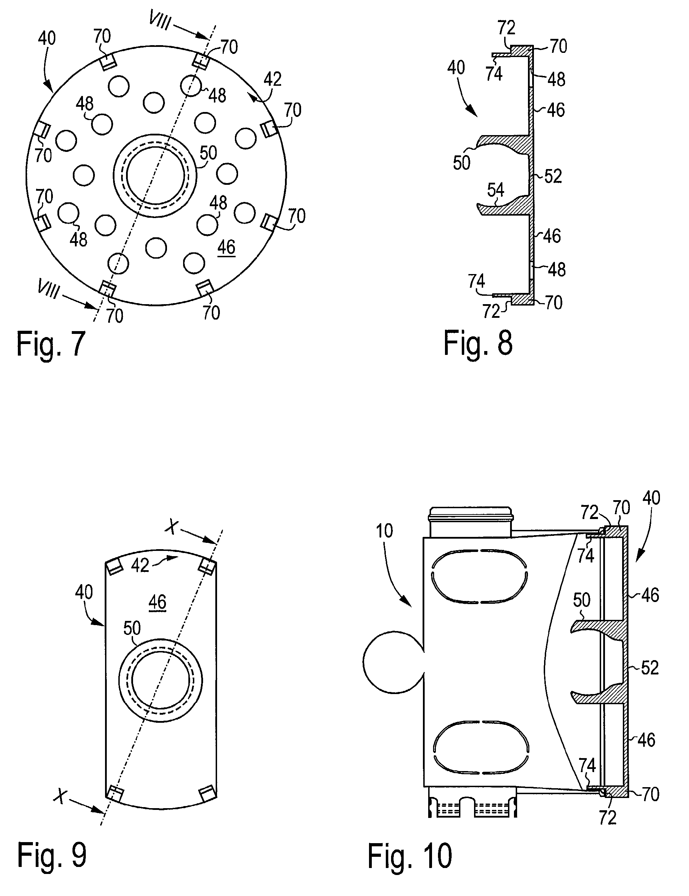

Die in Fig. 7 und Fig. 8 gezeigte Ausführungsalternative des Montagehalters 40 ermöglicht es in den gerade genannten Fällen, den gewünschten, tieferen Sitz des Montagehalters 40 in der Ausnehmung 60 auch bei einer bündigen Ausrichtung des Bodens 12 mit der Vorderfläche 66 zu erreichen. Der Montagehalter 40 weist dazu mehrere Halte- und Abstandselemente 70 auf, die in gleichmäßigem Winkelabstand entlang des äußeren Randes im Haltebereich 42 des Montagehalters 40 angeordnet sind. Wie aus Fig. 8 hervorgeht, ist jedes Halte- und Abstandselement 70 als stufenförmige Struktur mit einer Auflage 72 und einer über die Auflage 72 hinausragenden Haltezunge 74 ausgestaltet. Die in Fig. 8 gezeigte Ausgestaltung des Montagehalters 40 weist ferner keinen konischen, sondern einen im wesentlichen flachen Fixierbereich 46 auf, der sich in ungefähr einer Ebene mit dem Boden 52 des zweiten Verbindungselements 50 erstreckt.

Eine nochmalige Abwandlung des Montagehalters 40 ist in Fig. 9 dargestellt. Der Montagehalter 40 weist hier nicht eine ungefähr scheibenförmige, sondern eine an ein Rechteck oder einen Streifen angenäherte Grundform auf. Diese Ausgestaltung spart Material und ermöglicht es, den Montagehalter 40 in unterschiedlichen Orientierungen in der Ausnehmung 60 zu fixieren, um z.B. Kabelauslässe freizuhalten. Eine rechteckige Grundform des Montagehalters 40 ist insbesondere auch für kubische oder quaderförmige Einbaudosen 10 vorgesehen; hier kann sich der Montagehalter 40 in der Ausrichtstellung (Fig. 5) von Schmalseite zu Schmalseite oder von Längsseite zu Längsseite der Einbaudose 10 erstrecken. In weiteren Abwandlungen kann der Montagehalter 40 kreuzförmig oder sternförmig mit fünf oder mehr Armen ausgestaltet sein.

Montagehalter 40, die die gerade genannten Formen aufweisen, sind hinsichtlich ihrer weiteren Merkmale natürlich nicht auf das Ausführungsbeispiel von Fig. 9 beschränkt. Es ist vielmehr in Ausführungsvarianten vorgesehen, alle in diesem Dokument beschriebenen Ausgestaltungen mit allen genannten Formen zu kombinieren. Ein Beispiel für eine kreuzförmige Ausgestaltung ergibt sich, wenn in Fig. 3 die Aussparungen 44A, 44B, 44C, 44D vergrößert und bis zum zweiten Verbindungselement 50 fortgesetzt werden. Im Ausführungsbeispiel von Fig. 9 sind ferner die Löcher 48 fortgelassen worden. Auch dieses Merkmal kann in Abwandlungen der anderen im vorliegenden Dokument beschriebenen Ausführungsbeispiele vorgesehen sein.

In Fig. 10 ist der dem Betrachter zugewandte Seitenbereich der Einbaudose 10 teilweise weggebrochen gezeigt, um eine klarere Darstellung des im Querschnitt dargestellten Montagehalters 40 zu ermöglichen. Auf Fig. 10 geht hervor, daß bei dem auf die offene Seite der Einbaudose 10 aufgesteckten Montagehalter 40 gemäß Fig. 9 für jedes Halte- und Abstandselement 70 die Auflage 72 den Abstand zwischen der offenen Seite der Einbaudose 10 und dem Boden 52 des zweiten Verbindungselements 50 definiert. Die Haltezunge 74 liegt dagegen an der Innenfläche der Seitenwand 14 an und sorgt für den gewünschten, lockeren Klemmsitz des Montagehalters 40 auf der Einbaudose 10. Die Auflage 72 ist hinsichtlich ihrer Längserstreckung so dimensioniert, daß der Montagehalter 40 bei der in Fig. 5 gezeigten Montagesituation genau um das gewünschte Maß tiefer in den Mörtel 68 eingedrückt wird als ohne diesen Abstandshalter. Die Darstellung von Fig. 10 und die hier gegebene Beschreibung gelten entsprechend auch für den Montagehalter 40 gemäß Fig. 7.

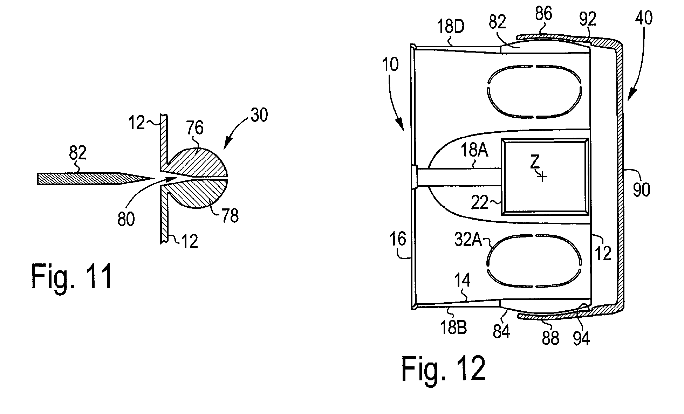

Wie bereits beschrieben, ist in der in Fig. 6 dargestellten Montagesituation die Verbindung zwischen dem Montagehalter 40 und der Einbaudose 10 relativ schwergängig, um auch dann eine Verschwenkung der bereits ausgerichteten Einbaudose 10 zu vermeiden, wenn z.B. seitlich eingeführte Leerrohre beträchtliche Kräfte auf die Einbaudose 10 ausüben. Eine zu starre Verbindung würde jedoch die exakte Einstellbarkeit der Einbaudose 10 beeinträchtigen. Die in Fig. 11 gezeigte Abwandlung der bisher beschriebenen Ausführungsbeispiele ist daher so ausgestaltet, daß die Verbindung zwischen dem Montagehalter 40 und der Einbaudose 10 nach der Ausrichtung der Einbaudose 10 festgelegt werden kann, um eine unerwünschte Verschwenkung der Einbaudose 10 sicher zu vermeiden.

Fig. 11 stellt im Schnitt einen Teil des Bodens 12 der Einbaudose 10 mit dem insgesamt kugelförmigen, ersten Verbindungselement 30 dar. Das erste Verbindungselement 30 ist hier in Form von zwei Halbkugeln 76, 78 ausgebildet, die einen durch den Boden 12 verlaufenden Spreizkanal 80 einschließen. Ein Sicherungskeil 82 kann durch den Spreizkanal 80 zwischen die Halbkugeln 76, 78 gedrückt werden. Bei dieser Ausführungsvariante treibt der Monteur, nachdem er die Einbaudose 10 endgültig ausgerichtet hat, den Sicherungskeil 82 mit einigen Hammerschlägen in den Spreizkanal 80. Die Kugelhälften 76, 78 werden dadurch auseinandergedrängt. Dies hat zur Folge, daß sich das erste Verbindungselement 30 im zweiten Verbindungselement 50 fest verklemmt. Eine weitere, unerwünschte Verschwenkung der Einbaudose 10 ist damit ausgeschlossen. Der Sicherungskeil 82 kann entweder in der Einbaudose 10 belassen werden oder, nachdem die Einbaudose 10 fest eingemörtelt ist, herausgezogen und wiederverwendet werden.

In Fig. 12 ist eine weitere Ausgestaltung des erfindungsgemäßen Montagesystems gezeigt. Hier ist das erste Verbindungselement 30 aus zwei Bogenabschnitten 82, 84 gebildet, die außen an der Seitenwand 14 der Einbaudose 10 ausgebildet sind und die in der Zeichenebene von Fig. 12 jeweils eine kreisbogenförmige Außenkontur aufweisen. Jeder dieser Bogenabschnitte 82, 84 schließt an den Boden 12 der Einbaudose 10 an und nimmt von dort aus ungefähr die halbe Höhe der Seitenwand 14 ein. Im Ausführungsbeispiel von Fig. 12 liegen die Außenkonturen der beiden Bogenabschnitte 82, 84 in der Zeichenebene auf einem gemeinsamen Kreis, dessen Mittelpunkt mit Z bezeichnet ist. In einer Ebene, die senkrecht zur Zeichenebene und durch den Mittelpunkt Z verläuft, folgen die Außenkonturen der beiden Bogenabschnitte 82, 84 in ihrer Krümmung der zylindrischen Seitenwand 14.

Der in Fig. 12 dargestellte Montagehalter 40 weist ebenfalls zwei Bogenabschnitte 86, 88 auf, die durch einen ungefähr rechteckigen Basisstreifen 90 miteinander verbunden sind. Die Bogenabschnitte 86, 88 bilden insgesamt das zweite Verbindungselement 50. Wenn die Einbaudose 10, wie in Fig. 12 gezeigt, in ihrer Einbaulage auf den Montagehalter 40 aufgesteckt ist, liegen die Bogenabschnitte 86, 88 des Montagehalters 40 an den jeweils entsprechend gekrümmten Flächen der Bogenabschnitte 82, 84 der Einbaudose 10 an. Zur offenen Seite der Einbaudose 10 hin ragen die Bogenabschnitte 82, 84 allerdings etwas über die Bogenabschnitte 86, 88 hinaus, um eine Verschwenkung der Einbaudose 10 zu ermöglichen.

Ungefähr in der Höhe des Bodens 12 der wie in Fig. 12 aufgesteckten Einbaudose 10 weisen die Bogenabschnitte 86, 88 des Montagehalters 40 je eine Rille 92, 94 auf. Diese Rillen 92, 94 dienen während der Ausrichtphase (Fig. 5) als Halter und Anschlag für den seitlichen Wulst 16 der Einbaudose 10, die zu diesem Zeitpunkt mit der offenen Seite zum Montagehalter 40 auf diesen aufgesteckt ist.

Weitere Modifikationen der hier durch einige Beispiele beschriebenen Erfindung sind für den Fachmann offensichtlich. Insbesondere sind weitere Ausführungsformen vorgesehen, die bislang nicht ausdrücklich erwähnte Kombinationen der im vorliegenden Dokument beschriebenen und in den Zeichnungen gezeigten Merkmale aufweisen.

## Patentansprüche

1. Montagesystem zur Installation einer Einbaudose (10) in eine Ausnehmung (60) eines Gebäudeteils, wobei das Montagesystem die Einbaudose (10) und einen mit der Einbaudose (10) verbindbaren Montagehalter (40) aufweist,
**dadurch gekennzeichnet, daß** der Montagehalter (40) dazu eingerichtet ist, an einer Sohle (64) der Ausnehmung (60) fixiert zu werden, und daß die Einbaudose (10) dazu eingerichtet ist, mit dem an der Sohle (64) fixierten Montagehalter (40) verbunden zu werden.

2. Montagesystem nach Anspruch 1,
**dadurch gekennzeichnet, daß** die Einbaudose (10) auf den an der Sohle (64) fixierten Montagehalter (40) aufsetzbar, insbesondere aufschnappbar, ist.

3. Montagesystem nach Anspruch 1 oder Anspruch 2,
**dadurch gekennzeichnet, daß** die Einbaudose (10) mindestens ein erstes Verbindungselement (30) aufweist, und daß der Montagehalter (40) mindestens ein zweites Verbindungselement (50) aufweist, wobei das erste und das zweite Verbindungselement (30, 50) miteinander in Eingriff bringbar sind.

4. Montagesystem nach einem der Ansprüche 1 bis 3,
**dadurch gekennzeichnet, daß** eines der beiden Verbindungselemente (30, 50) eine zumindest abschnittsweise gekrümmte Form, insbesondere die Form eines Kugelabschnitts, aufweist, und daß das andere der beiden Verbindungselemente (30, 50) diese Form zumindest teilweise zu umschließen vermag.

5. Montagesystem nach einem der Ansprüche 1 bis 4,
**dadurch gekennzeichnet, daß** der Montagehalter (40) dazu eingerichtet ist, durch Eindrücken in feuchten Mörtel (68) an der Sohle (64) der Ausnehmung (60) fixiert zu werden.

6. Montagesystem nach einem der Ansprüche 1 bis 5,
**dadurch gekennzeichnet, daß** die Einbaudose (10) einen Boden (12) und mindestens eine Seitenwand (14) aufweist, und daß der Montagehalter (40) auf die mindestens eine Seitenwand (14) der Einbaudose (10) aufsetzbar ist, so daß die Einbaudose (10) in einer Orientierung, in der ihr Boden (12) der Sohle (64) der Ausnehmung (60) abgewandt ist, als Hilfsmittel bei der Ausrichtung und/oder Fixierung des Montagehalters (40) an der Sohle (64) der Ausnehmung (60) zu dienen vermag.

7. Montagesystem zur Installation einer Einbaudose (10) in eine Ausnehmung (60) eines Gebäudeteils, wobei das Montagesystem die Einbaudose (10) und einen mit der Einbaudose (10) verbindbaren Montagehalter (40) aufweist,
**dadurch gekennzeichnet, daß** die Verbindung zwischen der Einbaudose (10) und dem Montagehalter (40) eine Veränderung der Position und/oder Lage der Einbaudose (10) relativ zu dem Montagehalter (40) gestattet.

8. Montagesystem nach Anspruch 7 und einem der Ansprüche 1 bis 6.

9. Montagesystem nach Anspruch 7 oder Anspruch 8,
**dadurch gekennzeichnet, daß** die Verbindung zwischen der Einbaudose (10) und dem Montagehalter (40) gegen eine weitere Veränderung der Position und/oder Lage der Einbaudose (10) relativ zu dem Montagehalter (40) sicherbar ist.

10. Einbaudose (10), die dazu eingerichtet ist, zusammen mit einem geeigneten Montagehalter (40) ein Montagesystem nach einem der Ansprüche 1 bis 9 zu bilden.

11. Montagehalter (40), der dazu eingerichtet ist, zusammen mit einer geeigneten Einbaudose (10) ein Montagesystem nach einem der Ansprüche 1 bis 9 zu bilden.

12. Verfahren zur Installation einer Einbaudose (10) in einer Ausnehmung (60) eines Gebäudeteils, wobei ein mit der Einbaudose (10) verbindbarer Montagehalter (40) verwendet wird, mit den Schritten:
- Fixieren des Montagehalters (40) an einer Sohle (64) der Ausnehmung (60), und
- Verbinden der Einbaudose (10) mit dem an der Sohle (64) der Ausnehmung (60) fixierten Montagehalter (40).
